# EUROPÄISCHE PATENTSCHRIFT

(11) **EP 0 518 134 B1**
(45) Veröffentlichungstag und Bekanntmachung des Hinweises auf die Patenterteilung: **12.07.1995**
(21) Anmeldenummer: 92108995.9
(22) Anmeldetag: 28.05.1992
(51) Int. Cl.: C09J 5/00

(54) **Verfahren und Vorrichtung zum Aufbringen eines Klebers**
Process and device for applying an adhesive
Procédé et dispositif pour appliquer un adhésif

(30) Priorität: 12.06.1991 DE 9107248 U; 14.08.1991 DE 4126854
(43) Veröffentlichungstag der Anmeldung: 16.12.1992
(73) Patentinhaber: Ratzky, Franz Edwin, D-66538 Neunkirchen (DE)
(72) Erfinder: Ratzky, Franz Edwin, D-66538 Neunkirchen (DE)
(74) Vertreter: Bernhardt, Winfrid, Dr.-Ing.

(56) Entgegenhaltungen:
- DE-A- 2 518 471
- DE-A- 4 014 270

## Beschreibung

Die Erfindung betrifft ein Verfahren zum Aufbringen eines durch Hitze zu erweichenden, insbesondere bituminösen, Klebers auf einen Untergrund, insbesondere auf einem Dach.
Ferner betrifft die Erfindung eine Vorrichtung zur Durchführung eines solchen Verfahrens.

Bituminöse Kleber, wie man sie bei Dacharbeiten verwendet, erfordern zum Auftragen verschiedene Gerätschaften. Diese Geräte sind teuer. Sie verlangen auch für kleinere Arbeiten verhältnismäßig viel Aufwand für ihren Auf- und Abbau. Anschließend müssen sie gereinigt werden. Die Rückstände aus den Gerätschaften sind Sondermüll.

Aus der DE-A-2 518 471 ist bekannt, flächiges Material mit einem Untergrund zu verkleben, vor allem Straßenmarkierungen anzubringen, unter Verwendung eines Heißschmelzklebers, der bereits selbst die flächige Form aufweist und durch vorheriges Erhitzen der Straße zum Schmelzen und Kleben gebracht wird. Der Heißschmelzkleber kann an dem flächigen Material haften, selbst das flächige Material sein oder als bloßer Kleber Band- oder Bahnform aufweisen.
In der DE-A-4 014 270 ist vorgeschlagen, Schnell-Klebstoffe (Sekunden- oder Blitzkleber) in kleinen Portionen vakuumdicht zu verpacken und die damit geschaffenen Klebebeutel zwischen die zu verklebenden Flächen zu schieben und durch Druck zum Platzen zu bringen und zu entleeren. Der Klebstoff wird dabei mehr oder weniger unkontrolliert freigesetzt.

Der Erfindung liegt die Aufgabe zugrunde, durch Hitze erweichende Kleber mit geringerem Vorrichtungs- und Arbeitsaufwand gezielt auf Flächen aufzubringen und zu aktivieren.

Gemäß der Erfindung wird dieser Zweck in der Weise erfüllt, daß der Kleber in einer Folienpackung auf den Untergrund aufgebracht wird und dann die, durch Hitze zerstörbare, Folie erhitzt wird und durch Zerstörung der Folie der Kleber freigesetzt und in die unmittelbare Berührung mit dem Untergrund gebracht wird.

Hier werden einfach die Folienpackungen ausgelegt und beispielsweise mittels eines Gasbrenners, eines Heißluftgebläses oder eines Hitzestrahlers erhitzt. Die entsprechend ausgewählte Folie reißt und schrumpft zusammen, so daß die Reste nicht mehr stören; sie decken in dieser Form den Untergrund nicht gegenüber dem Kleber ab, sondern werden in die Kleberschicht eingebettet.
Die Dicke der Folie wird man unter diesen Gesichtspunkten so gering wie möglich halten. Daß die Folie gegenüber dem von ihr eingeschlossenen Kleber beständig sein muß, versteht sich. Je nach den Verhältnissen kann es auch möglich sein, daß die Folie mehr oder weniger verbrennt oder verkohlt.
Nachdem der Kleber aus der Packung freigekommen ist, verläuft er weitgehend von selbst. Der Strahl der Brenngase oder der Luft hilft darüberhinaus mit mechanischer Wirkung, den Kleber auszubreiten.

Besonders vorteilhaft ist nach einer Weiterbildung der Erfindung die Verwendung der Folienpackungen in der Form gefüllter Schläuche.
Die Hitze erfaßt dann die Folie ziemlich auf dem gesamten Umfang der Packung und im Endergebnis vollständig im Gegensatz z.B. zu einem flach ausgebreiteten Beutel, an dessen Unterseite die Folie durch den Kleber abgedeckt ist und dadurch erhalten bleibt mit der Folge, daß sie die Berührung des Untergrunds durch den Kleber verhindert.

Beispielsweise werden zwei Bahnen eines Dachbelages unter Anwendung solcher Schläuche verklebt, die mit Abstand nebeneinander ausgelegt werden. Die Bahnen sind dann auf Streifen festgeklebt.

Aber auch ein vollflächiger Kleberauftrag ist nach der Erfindung möglich.

Hierfür ist es zweckmäßig, Schläuche mit nur geringem Abstand parallel nebeneinander zu legen und, beispielsweise mittels Fäden, netzartig zu verbinden oder auch kleine Einzelpackungen entsprechend anzuordnen und netzartig zu verbinden.

Um diese Packungen auf die zu belegenden Flächen zuzuschneiden, kann in jedem Falle an den Verbindungen getrennt werden. Es können aber auch die Schläuche oder sonstige Einzelpackungen durchschnitten werden. Auch in Längsrichtung könnte man übrigens kurze Schläuche durch Verbindungen aneinanderreihen, die sich einfach durchtrennen lassen.
Für häufig wiederkehrende Flächengrößen ist auch an vollständig in Vorfertigung angepaßte Packungen zu denken.

Ein konkreteres Beispiel sei kurz angeführt:
Ein unter der Bezeichnung "Adhaesivkleber" gebräuchlicher Bitumen-Kleber wird in einer Menge von 100 g auf 1 m in Schläuche von 12 bis 15 mm Durchmesser aus einer dünnen Kunststoffolie gefüllt. Die Schläuche sind Handelprodukt.
Beim Decken eines Daches werden jeweils da, wo eine Bahn des Dachbelages ausgelegt werden soll, drei Schläuche mit Abstand nebeneinander verlegt. Mit Hilfe eines Gasbrenners werden die jeweils drei Schläuche in eine Kleberschicht verwandelt; die Folie verschmilzt. Nun wird die Bahn darauf ausgelegt.

## Patentansprüche

1. Verfahren zum Aufbringen eines durch Hitze zu erweichenden, insbesondere bituminösen, Klebers auf einen Untergrund, insbesondere auf einem Dach,
dadurch gekennzeichnet,
daß der Kleber in einer Folienpackung auf den Untergrund aufgebracht wird und dann die, durch Hitze zerstörbare, Folie erhitzt wird und durch Zerstörung der Folie der Kleber freigesetzt und in die unmittelbare Berührung mit dem Untergrund gebracht wird.

2. Verfahren nach Anspruch 1,
dadurch gekennzeichnet,
daß mittels eines Gasbrenners, eines Heißluftgebläses oder eines Hitzestrahlers erhitzt wird.

3. Verfahren nach Anspruch 1 oder 2,
dadurch gekennzeichnet,
daß der Kleber in Folienpackungen von der Form gefüllter Schläuche aufgebracht wird.

4. Verfahren nach Anspruch 1 oder 2,
dadurch gekennzeichnet,
daß der Kleber auf Flächen in Folienpackungen von der Form netzartig miteinander verbundener Schläuche oder kleiner Einzelpackungen aufgebracht wird.

5. Verfahren nach Anspruch 4,
dadurch gekennzeichnet,
daß die Folienpackungen aus netzartig verbundenen Schläuchen oder kleinen Einzelpackungen auf die zu belegenden Flächen zugeschnitten werden, vorzugsweise durch Trennen an den Verbindungen.

6. Vorrichtung zur Durchführung eines Verfahrens nach einem der Ansprüche 1 bis 5,
gekennzeichnet durch eine Folienpackung eines durch Hitze zu erweichenden Klebers, deren Folie durch Hitze zerstörbar ist, derart, daß sie den Kleber auf dem zu belegenden Untergrund bei Bestrahlen mit heißem Gas oder Hitzestrahlung freigibt.

7. Vorrichtung nach Anspruch 6,
dadurch gekennzeichnet,
daß der Kleber ein bituminöser Kleber für Bauarbeiten, insbesondere Dacharbeiten, ist.

8. Vorrichtung nach Anspruch 6 oder 7,
dadurch gekennzeichnet,
daß die Folienpackung die Form eines gefüllten Schlauches hat.

9. Vorrichtung nach Anspruch 6 oder 7,
dadurch gekennzeichnet,
daß die Folienpackung die Form netzartig miteinander verbundener Schläuche oder kleiner Einzelpackungen hat.

10. Vorrichtung nach einem der Ansprüche 6 bis 8,
gekennzeichnet durch eine einer bestimmten Fläche in Vorfertigung angepaßte Packung.

## Claims

1. Process for the application of an adhesive to be softened by heat, in particular a bituminous adhesive, to a substrate, in particular to a roof, characterized in that the adhesive is applied to the substrate in a film pack and the heat-destructable film is then heated, and the adhesive is liberated by destruction of the film and brought into direct contact with the substrate.

2. Process according to Claim 1, characterized in that the heating is effected by means of a gas burner, a hot-air fan or a heat radiator.

3. Process according to Claim 1 or 2, characterized in that the adhesive is applied in film packs having the shape of filled tubes.

4. Process according to Claim 1 or 2, characterized in that the adhesive is applied to surfaces in film packs having the shape of tubes or small individual packs interconnected in the form of a net.

5. Process according to Claim 4, characterized in that the film packs comprising tubes or small individual packs connected in the form of a net are cut to the size of the areas to be covered, preferably by separation at the joints.

6. Apparatus for carrying out a process according to one of Claims 1 to 5, characterized by a film pack of an adhesive to be softened by heat, whose film is heat-destructable in such a way that it releases the adhesive onto the substrate to be covered on treatment with a stream of hot gas or heat radiation.

7. Apparatus according to Claim 6, characterized in that the adhesive is a bituminous adhesive for construction work, in particular roof work.

8. Apparatus according to Claim 6 or 7, characterized in that the film pack has the shape of a filled tube.

9. Apparatus according to Claim 6 or 7, characterized in that the film pack has the shape of tubes or small individual packs interconnected in the form of a net.

10. Apparatus according to one of Claims 6 to 8, characterized by a pack matched in prefabrication to a certain area.

## Revendications

1. Procédé pour appliquer un adhésif pouvant être ramolli par la chaleur, en particulier un adhésif bitumineux, sur une surface, en particulier sur un toit, caractérisé en ce que l'adhésif est appliqué sur la surface dans un emballage constitué par un film et en ce que le film pouvant être décomposé par la chaleur est chauffé et en ce que l'adhésif est libéré par la décomposition du film et est mis directement en contact avec la surface.

2. Procédé selon la revendication 1, caractérisé en ce qu'on chauffe à l'aide d'un brûleur à gaz, d'un compresseur à air chaud ou d'un émetteur de chaleur.

3. Procédé selon la revendication 1 ou 2, caractérisé en ce que l'adhésif est mis en oeuvre dans des emballages constitués par des films en forme de tuyaux remplis.

4. Procédé selon la revendication 1 ou 2, caractérisé en ce que l'adhésif est appliqué sur des surfaces dans des emballages constitués par des films en forme de tuyaux ou d'emballages individuels reliés l'un à l'autre de manière à former un réseau.

5. Procédé selon la revendication 4, caractérisé en ce que les emballages constitués par des films en forme de tuyaux ou d'emballages individuels reliés de manière à former un réseau sont coupés de manière à s'adapter aux surfaces à recouvrir, de préférence en coupant aux jonctions.

6. Dispositif pour réaliser un procédé selon une quelconque des revendications 1 à 5, caractérisé par un emballage constitué par un film d'un adhésif pouvant être ramolli par la chaleur dont l'emballage constitué par un film peut être décomposé par la chaleur de telle manière qu'il libère l'adhésif sur la surface à recouvrir lorsqu'on le soumet à l'effet d'un gaz chaud ou d'un rayonnement de chaleur.

7. Dispositif selon la revendication 6, caractérisé en ce que l'adhésif est un adhésif bitumineux pour des travaux de construction, en particulier pour des constructions de toitures.

8. Dispositif selon la revendication 6 ou 7, caractérisé en ce que l'emballage est constitué par un film a la forme d'un tuyau rempli.

9. Dispositif selon la revendication 6 ou 7, caractérisé en ce que l'emballage est constitué par un film a la forme de tuyaux ou d'emballages individuels reliés de manière à former un réseau.

10. Dispositif selon les revendications 6 à 8, caractérisé par un emballage préparé en fonction d'une surface déterminée.
